# EUROPÄISCHE PATENTSCHRIFT

(11) **EP 3 596 792 B1**
(45) Veröffentlichungstag und Bekanntmachung des Hinweises auf die Patenterteilung: **22.11.2023**
(21) Anmeldenummer: 18712545.5
(22) Anmeldetag: 15.03.2018
(51) Int. Cl.: H02J 3/02

(54) **ELEKTRISCHES ENERGIEVERSORGUNGSNETZ UND VERFAHREN ZU DESSEN BETRIEB**
ELECTRICAL ENERGY SUPPLYING NETWORK AND METHOD FOR OPERATING THEREOF
RÉSEAU ÉLECTRIQUE D' ALIMENTATION EN ÉNERGIE ET MÉTHODE POUR SON FONCTIONNEMENT

(30) Priorität: 17.03.2017 DE 102017105843
(43) Veröffentlichungstag der Anmeldung: 22.01.2020
(73) Patentinhaber: Christian-Albrechts-Universität zu Kiel, 24118 Kiel (DE)
(72) Erfinder: LISERRE, Marco, 24248 Mönkeberg (DE); DE CARNE, Giovanni, 76227 Karlsruhe (DE); BUTICCHI, Giampaolo, 315100 Ningbo (CN)
(74) Vertreter: Kröncke, Rolf
(86) Internationale Anmeldenummer: PCT/EP2018/056577
(87) Internationale Veröffentlichungsnummer: WO 2018/167226

(56) Entgegenhaltungen:
- EP-A1- 3 098 956
- DE-A1-102007 010 998
- BRUSKE SEBASTIAN ET AL: "Multi-frequency power transfer in a smart transformer based distribution grid", IECON 2014 - 40TH ANNUAL CONFERENCE OF THE IEEE INDUSTRIAL ELECTRONICS SOCIETY, IEEE, 29. Oktober 2014 (2014-10-29), Seiten 4325-4331, XP032739485, DOI: 10.1109/IECON.2014.7049153 [gefunden am 2015-02-24] in der Anmeldung erwähnt
- A Q HUANG ET AL: "The Future Renewable Electric Energy Delivery and Management (FREEDM) System: The Energy Internet", PROCEEDINGS OF THE IEEE., Bd. 99, Nr. 1, 1. Januar 2011 (2011-01-01) , Seiten 133-148, XP055250528, US ISSN: 0018-9219, DOI: 10.1109/JPROC.2010.2081330
- GAGIC MLADEN ET AL: "Multifrequency electrical systems: From power transmission to power electronic converters", 2017 IEEE SOUTHERN POWER ELECTRONICS CONFERENCE (SPEC), IEEE, 4. Dezember 2017 (2017-12-04), Seiten 1-7, XP033344623, DOI: 10.1109/SPEC.2017.8333595 [gefunden am 2018-04-06]

## Beschreibung

Die Erfindung betrifft ein elektrisches Energieversorgungsnetz zur Versorgung von an das Energieversorgungsnetz angeschlossenen elektrischen Verbrauchern mit elektrischer Energie, aufweisend wenigstens einen Leistungselektroniktransformator (Solid-State Transformator), durch den primärseitig dem Energieversorgungsnetz zugeführte elektrische Energie in sekundärseitige, den angeschlossenen elektrischen Verbrauchern zugeführte elektrische Energie gewandelt wird. Die Erfindung betrifft außerdem ein Verfahren zum Betrieb eines derartigen elektrischen Energieversorgungsnetzes.

Elektrische Energieversorgungsnetze dienen der Versorgung elektrischer Verbraucher mit elektrischer Energie. Energieversorgungsnetze verbinden Kraftwerke und andere Energiequellen, z.B. erneuerbare Energiequellen wie Windenergieanlagen und Photovoltaikanlagen, mit den elektrischen Verbrauchern. Hierzu weist das Energieversorgungsnetz unterschiedliche Spannungsebenen auf, um die Netzverluste zu verringern. Es wird bspw. unterschieden zwischen einem Höchstspannungsnetz, einem Hochspannungsnetz, einem Mittelspannungsnetz und einem Niederspannungsnetz. Das Niederspannungsnetz eignet sich zum direkten Anschließen üblicher elektrischer Verbraucher, wie z.B. von Haushaltsgeräten oder Industriemaschinen. Das Niederspannungsnetz wird mit einer Spannung im Bereich von 380 Volt für Dreiphasenwechselstrom und etwa 220 Volt für Einphasenwechselstrom betrieben. Die Netzfrequenz ist in Europa im Wesentlichen fest auf 50 Hertz festgelegt. Zur Umwandlung der elektrischen Energie zwischen den verschiedenen Spannungsebenen sind Umspannstationen mit Transformatoren im Einsatz.

Durch die vermehrte Einspeisung von Energie aus erneuerbaren Energiequellen sowie Fortschritte im Bereich der Leistungselektronik gibt es neue Konzepte zur Umwandlung und Verteilung der elektrischen Energie. Insbesondere wird der Einsatz sogenannter Leistungselektroniktransformatoren, die auch als Smart Transformer oder Solid-State Transformator bezeichnet werden, untersucht. Bei solchen Leistungselektroniktransformatoren erfolgt die Spannungswandlung durch getaktete Ansteuerung von Leistungshalbleitern, z.B. Transistoren. Ein mit solchen Leistungselektroniktransformatoren ausgestattetes elektrisches Energieversorgungsnetz weist gegenüber konventionellen Energieversorgungsnetzen viele Vorteile auf, z.B. durch die Möglichkeit intelligenterer Steuerung und Verteilung der elektrischen Energie. Diesbezüglich wird beispielhaft auf die Veröffentlichung von Marco Liserre, Giovanni De Carne und Sebastian Brüske, Multi-frequency power transfer in a smart transformer based distribution grid, IEEE 2014, hingewiesen. Aus der EP 3 098 956 A1 ist ein elektrisches Energieversorgungsnetz zur Versorgung von an das Energieversorgungsnetz angeschlossenen elektrischen Verbrauchern mit elektrischer Energie bekannt, aufweisend wenigstens einen Leistungselektroniktransformator, durch den primärseitig dem Energieversorgungsnetz zugeführte elektrische Energie in sekundärseitige, den angeschlossenen elektrischen Verbrauchern zugeführte elektrische Energie gewandelt wird.

Ein elektrisches Energieversorgungsnetz ist bekannt aus der Veröffentlichung von A Q HUANG ET AL: "The Future Renewable Electric Energy Delivery and Management (FREEDM) System: The Energy Internet", PROCEEDINGS OF THE IEEE., Bd. 99, Nr. 1, 1. Januar 2011 (2011-01-01), Seiten 133-148, XP055250528, US, ISSN: 0018-9219, DOI: 10.1109/JPROC.2010.2081330. Aus der DE 10 2007 010 998 A1 ist ein System und Verfahren zur dezentralen Versorgung von elektrischen Antrieben bekannt (die zweiteilige Form des Anspruchs 1 basiert auf dieses Dokument).

Der Erfindung liegt die Aufgabe zugrunde, ein auf solchen Leistungselektroniktransformatoren beruhendes elektrisches Energieversorgungsnetz hinsichtlich der Leistungsfähigkeit weiter zu entwickeln.

Diese Aufgabe wird mit einem elektrischen Energieversorgungsnetz gemäß Anspruch 1 gelöst. Dies beinhaltet, dass die elektrische Energie sekundärseitig von dem wenigstens einen Leistungselektroniktransformator als Wechselspannungssignal bereitgestellt ist, das einen rechteckförmigen Zeitverlauf aufweist, und der wenigstens eine Leistungselektroniktransformator zumindest keine sekundärseitigen Frequenzfilter aufweist. Durch die Erfindung wird die gesamte Energieübertragung in einem elektrischen Energieversorgungsnetz, das auf Leistungselektroniktransformatoren beruht, erheblich effizienter gestaltet und besondere Synergieeffekte, die mit der getaktet geschalteten Ansteuerung der Transistoren der Leistungselektroniktransformatoren zusammenhängen, sinnvoll genutzt. Bei bisherigen Ansätzen sollten die Leistungselektroniktransformatoren immer mit relativ stark wirkenden Frequenzfiltern ausgangsseitig beschaltet werden, um sekundärseitig die gewünschte sinusförmige Wechselspannung, wie sie im Niederspannungsnetz bisher gebräuchlich ist, bereitzustellen. Mit solchen stark dimensionierten Ausgangsfiltern steigen aber die Verluste, insbesondere die Schaltverluste der Halbleiter. In Abkehr von bekannten Ansätzen wird daher bei der vorliegenden Erfindung die drastische Änderung vorgeschlagen, solche sekundärseitigen Frequenzfilter von Leistungselektroniktransformatoren vollständig zu eliminieren oder zumindest so stark zu minimieren, dass keine wesentlichen Leistungsverluste damit mehr einhergehen.

Ein weiterer Vorteil des Entfallens der sekundärseitigen Frequenzfilter besteht darin, dass unerwünschte Resonanzeffekte durch solche Filter entfallen.

Bei bisherigen Ansätzen wurden die Leistungselektronikbauteile der Leistungselektroniktransformatoren verstärkt im linearen Arbeitsbereich geschaltet, um hierdurch bereits möglichst sinusförmige Ausgangssignale zu erzeugen. Durch die vorliegende Erfindung wird auch dies überflüssig. Vielmehr können die Leistungselektronikkomponenten unter weitgehender Vermeidung der Nutzung des linearen Bereiches zwischen zwei diskreten Schaltzuständen hin- und hergeschaltet werden, was die Schaltverluste der Halbleiter weiter verringert.

Dementsprechend kann ein ohne Aufwand im Leistungselektroniktransformator sekundärseitig erzeugbares Rechteck-Wechselspannungssignal im Wesentlichen ungefiltert in das sekundärseitige Netz abgegeben werden. Hierbei sind bei modernen angeschlossenen Verbrauchern keine besonderen Zusatzmaßnahmen zu treffen, da diese bereits eine Leistungselektronik-Schnittstelle zur elektrischen Netzversorgung aufweisen und daher im Wesentlichen unbeeinflusst von der Kurvenform der bereitgestellten Wechselspannung sind. Für Verbraucher, die bezüglich der Kurvenform empfindlich reagieren, was hauptsächlich ältere Geräte sein dürften, kann ein entsprechendes Vorschaltgerät eingesetzt werden.

Hierdurch wird zudem die Effizienz der elektrischen Energieübertragung deutlich verbessert. Dadurch, dass die Leistungselektroniktransformatoren durch ihre Leistungselektronikkomponenten insbesondere besonders geeignet zur Erzeugung rechteckförmiger Schaltsignale sind, lässt sich die Erfindung bei einem elektrischen Energieversorgungsnetz, das auf Leistungselektroniktransformatoren beruht, besonders effizient realisieren.

Zudem kann die Tatsache, dass in einem solchen rechteckförmigen Zeitverlauf des Wechselspannungssignals ein hoher Anteil an Oberwellen vorhanden ist, für bestimmte Steuerungszwecke im sekundärseitigen Teil des Energieversorgungsnetzes genutzt werden, z.B. zur Energieverteilung zu bestimmten Verbrauchern bis hin zum Abschalten bestimmter Verbraucher. Ein weiterer Vorteil ist somit, dass eine gezieltere Steuerung der Energiebereitstellung auf der Sekundärseite des Leistungselektroniktransformators möglich wird.

Ein weiterer Vorteil besteht darin, dass der Leistungselektroniktransformator mit vergleichsweise geringen Frequenzen, z.B. im Bereich von einigen 100 Hertz, betrieben werden kann. Auch hierdurch können die Schaltverluste minimiert und somit die Effizienz gesteigert werden.

Das Energieversorgungsnetz kann primärseitig ein Mittelspannungsnetz und sekundärseitig ein Niederspannungsnetz sein.

Gemäß einer vorteilhaften Weiterbildung der Erfindung ist vorgesehen, dass unterschiedliche elektrische Verbraucher frequenzselektiv durch jeweils zugeordnete, unterschiedliche Spektralanteile der sekundärseitig bereitgestellten Wechselspannung versorgt sind. Auf diese Weise können unterschiedliche Verbraucher oder Gruppen von Verbrauchern zentral gesteuert mit elektrischer Energie versorgt werden, d.h. sie können durch die zentrale elektrische Energieversorgung ein- und ausgeschaltet werden oder, sofern der Verbraucher dazu geeignet ist, mit einer geringeren elektrischen Leistung versorgt werden. Hierfür sind insbesondere keine lokalen Leistungsunterbrechungseinrichtungen, die bei den Verbrauchern angeordnet sind, erforderlich, wie dies bisher der Fall war. Zudem kann hierdurch auch ein direkter elektrischer Energietransfer zwischen einzelnen Verbrauchern realisiert werden. Auf diese Weise kann die elektrische Energie sozusagen über unterschiedliche Kanäle übertragen werden, die durch bestimmte Spektralanteile im Frequenzspektrum des Wechselspannungssignals festgelegt sind. Auf diese Weise wird ein Punkt-zu-Punkt Leistungstransfer der elektrischen Energie möglich.

Mit dem Begriff "Spektralanteile" sind Anteile des Frequenzspektrums der bereitgestellten Wechselspannung gemeint. Dies können einzelne Frequenzen sein, oder einer oder mehrere Frequenzbereiche (entsprechend einem oder mehreren Spektralbereichen).

Gemäß der Erfindung ist vorgesehen, dass die von dem wenigstens einen Leistungselektroniktransformator sekundärseitig bereitgestellte elektrische Energie über einen einem jeweiligen Verbraucher oder einer Gruppe von Verbrauchern zugeordneten weiteren Leistungselektroniktransformator zugeführt ist. Auf diese Weise kann verbraucherseitig die als Wechselspannungssignal bereitgestellte elektrische Energie in eine für den Verbraucher geeignete Form umgewandelt werden, z.B. in Gleichspannung. Ein solcher weiterer Leistungselektroniktransformator ist besonders geeignet für die Umwandlung des zugeführten Rechteck-Wechselspannungssignals.

Gemäß der Erfindung ist vorgesehen, dass der dem jeweiligen Verbraucher oder der Gruppe von Verbrauchern zugeordnete weitere Leistungselektroniktransformator dazu eingerichtet ist, einen oder mehrere dem jeweiligen Verbraucher oder der Gruppe von Verbrauchern jeweils zugeordnete Spektralanteile der sekundärseitig bereitgestellten Wechselspannung zu detektieren und dem jeweiligen Verbraucher oder der Gruppe von Verbrauchern frequenzselektiv bereitzustellen. Auf diese Weise dient der weitere Leistungselektroniktransformator als verbraucherseitiger Decoder zum Dekodieren (oder Detektieren) der für den jeweiligen Verbraucher oder der Gruppe von Verbrauchern vom zentralen Leistungselektroniktransformator frequenzselektiv bereitgestellten elektrischen Energie. Diese Aufgabe muss dann nicht von den Verbrauchern selbst übernommen werden.

Gemäß der Erfindung ist vorgesehen, dass der wenigstens eine Leistungselektroniktransformator dazu eingerichtet ist, einen oder mehrere Spektralanteile der sekundärseitigen Wechselspannung gegenüber anderen Spektralanteilen zu priorisieren, indem nichtpriorisierte oder geringer priorisierte Spektralanteile abgeschaltet werden oder ihre Spannungsamplitude abgesenkt wird. Auf diese Weise können bestimmte Verbraucher bevorzugt mit elektrischer Energie versorgt werden, z.B. sicherheitsrelevante Systeme in Krankenhäusern.

Gemäß einer vorteilhaften Weiterbildung der Erfindung ist vorgesehen, dass die Priorisierung abhängig von wenigstens einem Kennwert der Primärseite und/oder der Sekundärseite des Energieversorgungssystems und/oder des wenigstens einen Leistungselektroniktransformators erfolgt. Der Kennwert der Primärseite kann z.B. eine primärseitig nicht ausreichend verfügbare elektrischer Energie, Spannungsschwankungen oder sonstige Störungen der Primärseite sein. Auf diese Weise können die höher priorisierten Verbraucher auch bei Störungen des primärseitigen Energieversorgungsnetzes zuverlässig weiter betrieben werden. Ein anderer Kennwert, in diesem Fall ein Kennwert des Leistungselektroniktransformators, kann z.B. die Belastungssituation des Leistungstransformators sein. So kann bei einer Überbelastung des Leistungstransformators die Versorgung der niedriger priorisierten Verbraucher reduziert werden.

Ein anderer Anwendungsfall für die Priorisierung kann z.B. eine Frequenz- oder Spannungsunterstützung im primärseitigen Netz sein, oder einem dem primärseitigen Netz übergeordneten Teil des Energieversorgungsnetzes, z.B. im Hochspannungsnetz. Dies kann durch ein Variieren des Energieverbrauchs der Verbraucher abhängig von Anforderungen, die von einer Steuerung des Energieversorgungsnetzes gestellt werden, erfolgen. Wenn bspw. eine Reduzierung der Leistung eines Verbrauchers für eine kurze Zeit, z.B. 10 % der Einschaltdauer, erforderlich wird, kann dies kurzfristig durch den Leistungselektroniktransformator bzw. dessen Steuerungseinrichtung ausgeführt werden, indem die elektrische Energie von einem niedrig priorisierten Verbraucher dem höher priorisierten Verbraucher bereitgestellt wird, indem der Spektralanteil des niedrig priorisierten Verbrauchers verringert oder auf Null gesetzt wird.

Ein weiterer Anwendungsfall kann eine Interaktion des Leistungselektroniktransformators bzw. dessen Steuereinrichtung mit lokalen Energieerzeugern und Lasten sein, die in einem bestimmten Spektralbereich des Wechselspannungssignals betrieben werden. Der Leistungselektroniktransformator kann dabei die Energieversorgung niedrig priorisierter Verbraucher reduzieren, um lokal die Energie mit den lokalen Energieerzeugern auszugleichen. Es ist ebenfalls möglich, die lokale Energieerzeugung anzupassen, indem der Leistungselektroniktransformator oder dessen Steuereinrichtung mit entsprechenden Steuereinrichtungen der lokalen Energieerzeugung kommuniziert und sich abstimmt.

Gemäß einer vorteilhaften Weiterbildung der Erfindung ist vorgesehen, dass das Energieversorgungssystem zur dynamischen Rekonfiguration und Neuzuordnung der von den einzelnen Verbrauchern genutzten Spektralanteile der sekundärseitigen Wechselspannung eingerichtet ist. Eine solche Rekonfiguration und Neuzordnung kann bspw. softwaremäßig erfolgen, z.B. in einer elektronischen Steuerungseinrichtung des Energieversorgungsnetzes. Zudem können auch die Verbraucher Einfluss darauf nehmen, über welchen oder welche Spektralanteile der bereitgestellten Wechselspannung sie mit elektrischer Energie versorgt werden. Dies können die Verbraucher entweder autark festlegen, oder durch Kommunikation mit einer zentralen Steuerungseinrichtung des elektrischen Energieversorgungsnetzes, die solche Anforderungen der Verbraucher empfängt und in eine Energieversorgungskonfiguration übernimmt.

Die eingangs genannte Aufgabe wird ferner durch ein Verfahren gemäß Anspruch 5 zum Betrieb eines derartigen elektrischen Energieversorgungsnetzes gelöst. Dabei ist die elektrische Energie sekundärseitig von wenigstens einem Leistungselektroniktransformator als Wechselspannungssignal bereitgestellt, das einen rechteckförmigen Zeitverlauf aufweist, und dieses rechteckförmige Wechselspannungssignal den angeschlossenen elektrischen Verbrauchern ohne Frequenzfilterung unmittelbar oder mittelbar zugeführt wird. Auch hierdurch können die zuvor erläuterten Vorteile realisiert werden.

Hierbei kann das rechteckförmige Energieversorgungssignal den angeschlossenen elektrischen Verbrauchern mittelbar über wenigstens einen weiteren Leistungselektroniktransformator zugeführt werden. Auf diese Weise kann eine Anpassung der bereitgestellten elektrischen Energie an die Erfordernisse des jeweiligen Verbrauchers realisiert werden. Zudem kann der verbraucherseitige weitere Leistungselektroniktransformator für die Dekodierung der für die Energieversorgung der Verbraucher genutzten Spektralanteile der sekundärseitigen Wechselspannung genutzt werden.

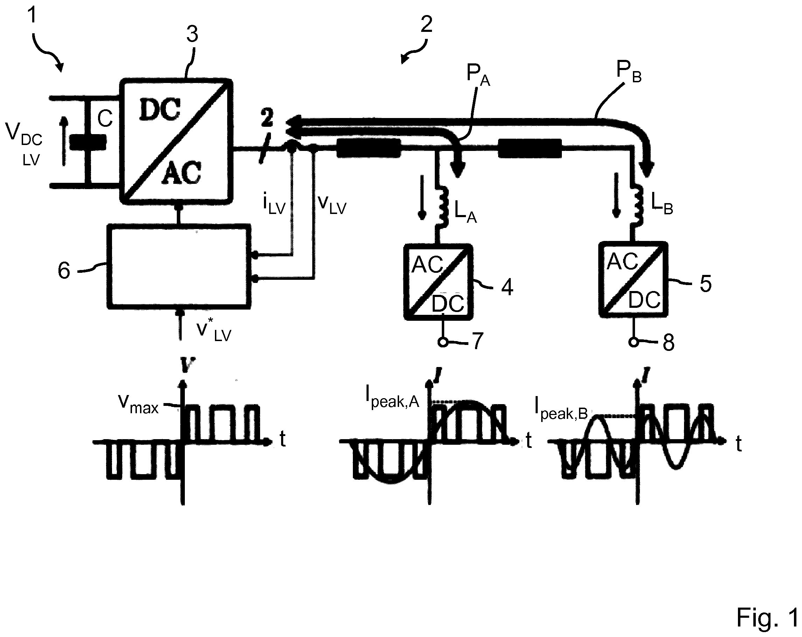

Die Erfindung wird nachfolgend anhand eines Ausführungsbeispiels unter Verwendung einer Zeichnung näher erläutert. Die Zeichnung Figur 1 zeigt in schematischer Darstellung ein elektrisches Energieversorgungsnetz mit einer Primärseite 1 und einer Sekundärseite 2. Das elektrische Energieversorgungsnetz kann primärseitig bspw. ein Mittelspannungsnetz sein, und sekundärseitig bspw. ein Niederspannungsnetz. Die Primärseite 1 ist mit der Sekundärseite 2 durch einen Leistungselektroniktransformator 3 gekoppelt. In diesem Fall wird davon ausgegangen, dass primärseitig als Eingangsspannung V_{DC,LV} eine Gleichspannung zur Verfügung steht, die über einen Kondensator C mit der Primärseite des Leistungselektroniktransformators 3 gekoppelt ist.

Der Leistungselektroniktransformator 3 gibt an der Sekundärseite 2 eine eben rechteckförmige Wechselspannung ab. An der Ausgangsseite des Leistungselektroniktransformators 3, d.h. an der Sekundärseite 2, wird die von dem Leistungselektroniktransformator 3 eingespeiste elektrische Energie hinsichtlich Spannung v_{LV} und Strom iLv überwacht. Die Größen v_{LV} und i_{LV} werden einer Steuereinrichtung 6 zugeführt, die den Leistungselektroniktransformator 3 entsprechend einer vorgegebenen Steuerungs- oder Regelungsstrategie steuert. Beispielsweise kann die Ausgangsspannung v_{LV} durch die Steuereinrichtung 6 auf einen Sollwert v*_{LV} geregelt werden. Das Zeitdiagramm unterhalb der Steuereinrichtung 6 zeigt die Steuerung des Leistungselektroniktransformators 3 zur Abgabe des rechteckförmigen Wechselspannungssignals mit einem Spitzenwert Vₘₐₓ.

Im dargestellten Ausführungsbeispiel sind an die Sekundärseite 2 zwei Lastzweige dargestellt, an die entsprechende Verbraucher angeschlossen werden können. Ein erster Lastzweig A wird über einen ersten Spektralanteil des Wechselspannungssignals mit einer Leistung P_{A} versorgt. Der Lastzweig A ist über eine Koppelinduktivität L_{A} mit Verbrauchern verbunden, die an einem Anschlusspunkt 7 angeschlossen werden können. Die Verbraucher können entweder direkt mit der Koppelinduktivität L_{A} verbunden sein, oder über den dargestellten weiteren Leistungselektroniktransformator 4. In diesem Sinne kann auch der weitere Leistungselektroniktransformator 4 bereits als Verbraucher auf der Sekundärseite 2 angesehen werden.

Die Figur 1 zeigt einen zweiten Lastzweig B, der über eine Koppelinduktivität L_{B} angeschlossen ist. Entsprechende Verbraucher können hier an einem Anschlusspunkt 8 angeschlossen werden. Die Verbraucher können direkt an die Koppelinduktivität L_{B} angeschlossen sein oder, wie dargestellt, über einen weiteren Leistungselektroniktransformator 5. In diesem Sinne ist der weitere Leistungselektroniktransformator 5 auch bereits als Verbraucher im Lastkreis B anzusehen. Der Lastkreis B wird über einen zweiten Spektralanteil des Wechselspannungssignals mit einer Leistung P_{B} versorgt.

Wie in den jeweiligen Strom-Zeit-Diagrammen unterhalb der Lastkreise A, B erkennbar ist, wird der Lastkreis A mit einem anderen Spektralanteil des Frequenzspektrums des Wechselspannungssignals versorgt als der Lastkreis B, bei dem ein höherfrequenter Spektralanteil als beim Lastkreis A genutzt wird. Die entsprechende Dekodierung der einem Lastkreis A, B zugeordneten Spektralanteile kann entweder von den angeschlossenen Verbrauchern selbst durchgeführt werden, oder durch den jeweiligen weiteren Leistungselektroniktransformator 4, 5, der auf die zugeordnete Frequenz oder den Frequenzbereich eingestellt ist.

## Patentansprüche

1. Elektrisches Energieversorgungsnetz zur Versorgung von an das Energieversorgungsnetz angeschlossenen elektrischen Verbrauchern mit elektrischer Energie, aufweisend wenigstens einen Leistungselektroniktransformator (3), auch als Solid-State Transformator bezeichnet, durch den primärseitig dem Energieversorgungsnetz zugeführte elektrische Energie in sekundärseitige, den angeschlossenen elektrischen Verbrauchern zugeführte elektrische Energie gewandelt wird, wobei die elektrische Energie sekundärseitig von dem wenigstens einen Leistungselektroniktransformator (3) als Wechselspannungssignal (v_{LV}) bereitgestellt ist, das einen rechteckförmigen Zeitverlauf aufweist, durch den Leistungshalbleiter-Schaltverluste reduziert sind, und der wenigstens eine Leistungselektroniktransformator (3) zumindest keine sekundärseitigen Frequenzfilter aufweist, wodurch die Effizienz des gesamten Systems durch Verringerung der Verluste in dem wenigstens einen Leistungselektroniktransformator und durch Eliminierung der sekundärseitigen Frequenzfilter gesteigert ist, **dadurch gekennzeichnet, dass**
a) die von dem wenigstens einen Leistungselektroniktransformator (3) sekundärseitig bereitgestellte elektrische Energie über einen einem jeweiligen Verbraucher oder einer Gruppe von Verbrauchern zugeordneten weiteren Leistungselektroniktransformator (4, 5) zugeführt ist, wobei der dem jeweiligen Verbraucher oder der Gruppe von Verbrauchern zugeordnete weitere Leistungselektroniktransformator (4, 5) dazu eingerichtet ist, einen oder mehrere dem jeweiligen Verbraucher oder der Gruppe von Verbrauchern jeweils zugeordnete Spektralanteile der sekundärseitig bereitgestellten Wechselspannung (v_{LV}) zu detektieren und dem jeweiligen Verbraucher oder der Gruppe von Verbrauchern frequenzselektiv bereitzustellen,
und/oder
b) der wenigstens eine Leistungselektroniktransformator (3) dazu eingerichtet ist, einen oder mehrere Spektralanteile der sekundärseitigen Wechselspannung (v_{LV}) gegenüber anderen Spektralanteilen zu priorisieren, indem nichtpriorisierte oder geringer priorisierte Spektralanteile abgeschaltet werden oder ihre Spannungsamplitude abgesenkt wird.

2. Energieversorgungsnetz nach dem vorhergehenden Anspruch, **dadurch gekennzeichnet, dass** unterschiedliche elektrische Verbraucher frequenzselektiv durch jeweils zugeordnete, unterschiedliche Spektralanteile der sekundärseitig bereitgestellten Wechselspannung (v_{LV}) versorgt sind.

3. Energieversorgungssystem nach Anspruch 1, **dadurch gekennzeichnet, dass** die Priorisierung abhängig von wenigstens einem Kennwert der Primärseite (1) und/oder der Sekundärseite (2) des Energieversorgungssystems und/oder des wenigstens einen Leistungselektroniktransformators (3) erfolgt.

4. Energieversorgungssystem nach einem der vorhergehenden Ansprüche,
**dadurch gekennzeichnet, dass** das Energieversorgungssystem zur dynamischen Rekonfiguration und Neuzuordnung der von den einzelnen Verbrauchern genutzten Spektralanteile der sekundärseitigen Wechselspannung (v_{LV}) eingerichtet ist.

5. Verfahren zum Betrieb eines elektrischen Energieversorgungsnetzes nach einem der vorhergehenden Ansprüche, wobei die elektrische Energie sekundärseitig von wenigstens einem Leistungselektroniktransformator (3) als Wechselspannungssignal (v_{LV}) bereitgestellt ist, das einen rechteckförmigen Zeitverlauf aufweist, und dieses rechteckförmige Wechselspannungssignal den angeschlossenen elektrischen Verbrauchern ohne Frequenzfilterung unmittelbar oder mittelbar zugeführt wird, wodurch die Effizienz des gesamten Systems durch Verringerung der Verluste infolge der verringerten Leistungshalbleiter-Schaltverluste in dem wenigstens einen Leistungselektroniktransformator und durch Eliminierung der sekundärseitigen Frequenzfilter gesteigert ist.

6. Verfahren nach dem vorhergehenden Anspruch, **dadurch gekennzeichnet, dass** das rechteckförmige Wechselspannungssignal den angeschlossenen elektrischen Verbrauchern mittelbar über wenigstens einen weiteren Leistungselektroniktransformator (4, 5) zugeführt wird.

## Claims

1. Electrical power supply network for supplying electrical consumers connected to the power supply network with electrical energy, having at least one power electronics transformer (3), also referred to as a solid-state transformer, by means of which electrical energy supplied on the primary side to the power supply network is converted into electrical energy supplied on the secondary side to the connected electrical consumers, the electrical energy being provided on the secondary side by the at least one power electronics transformer (3) as an AC voltage signal (v_{LV}), which has a rectangular time characteristic by which power semiconductor switching losses are reduced, and the at least one power electronics transformer (3) has at least no secondary-side frequency filters, whereby the efficiency of the entire system is increased by reducing the losses in the at least one power electronics transformer and by eliminating the secondary-side frequency filters, **characterized in that**
a) the electrical energy provided on the secondary side by the at least one power electronics transformer (3) is supplied via a further power electronics transformer (4, 5) assigned to a respective load or a group of loads, the further power electronics transformer (4, 5) assigned to the respective load or group of loads is set up to detect one or more spectral components of the alternating voltage (v_{LV}) provided on the secondary side, which spectral components are respectively assigned to the respective load or group of loads, and to provide them to the respective load or group of loads in a frequency-selective manner,
and/or
b) the at least one power electronics transformer (3) is set up to prioritize one or more spectral components of the secondary-side AC voltage (v_{LV}) with respect to other spectral components, **in that** non-prioritized or lower-prioritized spectral components are switched off or their voltage amplitude is reduced.

2. Power supply network according to the preceding claim, **characterized in that** different electrical loads are supplied in a frequency-selective manner by respectively assigned, different spectral components of the AC voltage (v_{LV}) provided on the secondary side.

3. Power supply system according to claim 1, **characterized in that** the prioritization takes place as a function of at least one characteristic value of the primary side (1) and/or of the secondary side (2) of the power supply system and/or of the at least one power electronics transformer (3).

4. Power supply system according to any one of the preceding claims, **characterized in that** the power supply system is arranged for dynamic reconfiguration and reallocation of the spectral components of the secondary side AC voltage (v_{LV}) used by the individual loads.

5. Method for operating an electrical power supply network according to one of the preceding claims, wherein the electrical power is provided on the secondary side by at least one power electronics transformer (3) as an AC voltage signal (v_{LV}) which has a square-wave time characteristic and this rectangular AC voltage signal is supplied directly or indirectly to the connected electrical loads without frequency filtering, whereby the efficiency of the entire system is increased by reducing the losses as a result of the reduced power semiconductor switching losses in the at least one power electronics transformer and by eliminating the secondary-side frequency filters.

6. Method according to the preceding claim, **characterized in that** the square-wave AC voltage signal is fed to the connected electrical loads indirectly via at least one further power electronics transformer (4, 5).

## Revendications

1. Réseau électrique d'alimentation en énergie destiné à l'alimentation en énergie électrique de consommateurs électriques raccordés au réseau d'alimentation en énergie, comprenant au moins un transformateur électronique de puissance (3), désigné également comme transformateur à semi-conducteurs (solid-state transformer), par lequel l'énergie électrique amenée du côté primaire au réseau d'alimentation en énergie est transformée en énergie électrique amenée du côté secondaire aux consommateurs électriques raccordés,
dans lequel
l'énergie électrique est fournie du côté secondaire par ledit au moins un transformateur électronique de puissance (3) sous forme de signal de tension alternative (V_{LV}) qui présente une courbe temporelle rectangulaire grâce à laquelle les pertes de commutation des semi-conducteurs de puissance sont réduites, et
ledit au moins un transformateur électronique de puissance (3) ne présente pas de filtres de fréquence au moins du côté secondaire, ce qui augmente l'efficacité de l'ensemble du système en réduisant les pertes dans ledit au moins un transformateur électronique de puissance et en éliminant les filtres de fréquence du côté secondaire,
**caractérisé en ce que**
a) l'énergie électrique fournie du côté secondaire par ledit au moins un transformateur électronique de puissance (3) est amenée par l'intermédiaire d'un autre transformateur électronique de puissance (4, 5) affecté à un consommateur respectif ou à un groupe de consommateurs, l'autre transformateur électronique de puissance (4, 5) affecté au consommateur respectif ou au groupe de consommateurs étant conçu pour détecter une ou plusieurs composantes spectrales de la tension alternative (V_{LV}) fournie du côté secondaire, respectivement affectées au consommateur respectif ou au groupe de consommateurs, et pour les fournir de manière sélective en fréquence au consommateur respectif ou au groupe de consommateurs,
et/ou
b) ledit au moins un transformateur électronique de puissance (3) est conçu pour donner la priorité à une ou à plusieurs composantes spectrales de la tension alternative (V_{LV}) du côté secondaire par rapport à d'autres composantes spectrales, en coupant les composantes spectrales non prioritaires ou moins prioritaires ou en abaissant leur amplitude de tension.

2. Réseau d'alimentation en énergie selon la revendication précédente, **caractérisé en ce que** différents consommateurs électriques sont alimentés de manière sélective en fréquence par des composantes spectrales différentes, respectivement affectées, de la tension alternative (V_{LV}) fournie du côté secondaire.

3. Système d'alimentation en énergie selon la revendication 1,
**caractérisé en ce que** la priorisation est effectuée en fonction d'au moins une valeur caractéristique du côté primaire (1) et/ou du côté secondaire (2) du système d'alimentation en énergie et/ou dudit au moins un transformateur électronique de puissance (3).

4. Système d'alimentation en énergie selon l'une des revendications précédentes,
**caractérisé en ce que** le système d'alimentation en énergie est conçu pour reconfigurer et réaffecter dynamiquement les composantes spectrales de la tension alternative (V_{LV}) du côté secondaire, utilisées par les consommateurs individuels.

5. Procédé d'exploitation d'un réseau électrique d'alimentation en énergie selon l'une des revendications précédentes,
dans lequel l'énergie électrique est fournie du côté secondaire par au moins un transformateur électronique de puissance (3) sous la forme d'un signal de tension alternative (V_{LV}) qui présente une courbe temporelle rectangulaire, et ce signal de tension alternative rectangulaire est amené sans filtrage de fréquence directement ou indirectement aux consommateurs électriques raccordés, ce qui permet d'augmenter l'efficacité de l'ensemble du système en réduisant les pertes grâce à la réduction des pertes de commutation des semi-conducteurs de puissance dans ledit au moins un transformateur électronique de puissance et en éliminant les filtres de fréquence du côté secondaire.

6. Procédé selon la revendication précédente,
**caractérisé en ce que** le signal de tension alternative rectangulaire est amené indirectement aux consommateurs électriques raccordés par l'intermédiaire d'au moins un autre transformateur électronique de puissance (4, 5).
